# EUROPEAN PATENT SPECIFICATION

(11) **EP 2 467 633 B1**
(45) Date of publication and mention of the grant of the patent: **30.09.2015**
(21) Application number: 10748127.7
(22) Date of filing: 20.08.2010
(51) Int. Cl.: F16L 55/115, F16L 47/03, B29C 65/34, B29C 65/66, B29C 65/82, B29C 65/00, B29C 57/04, F16L 55/11, B29C 55/24

(54) **METHOD OF SEALING A PLASTICS PIPE**
VERFAHREN ZUR ABDICHTUNG EINES KUNSTSTOFFROHRS
PROCÉDÉ D ÉTANCHÉIFICATION D'UN TUYAU EN MATIÈRE PLASTIQUE

(30) Priority: 20.08.2009 GB 0914579
(43) Date of publication of application: 27.06.2012
(73) Proprietor: Radius Systems Limited, Alfreton, Derbyshire DE55 2JJ (GB)
(72) Inventor: MUCKLE, Derek, Long Whatton, Leicestershire LE12 5DN (GB); DICKINSON, Alan, John, Nr Alfreton, Derbyshire DE55 5JD (GB)
(74) Representative: Stainthorpe, Vanessa Juliet
(86) International application number: PCT/GB2010/051382
(87) International publication number: WO 2011/021050

(56) References cited:
- EP-A1- 1 674 241
- EP-A1- 1 745 917
- GB-A- 2 335 013
- GB-A- 2 431 611
- JP-A- 7 243 577
- JP-A- 2002 235 892
- JP-A- 2009 097 657
- US-A- 6 044 686

## Description

This invention relates to a method of sealing a plastics pipe and in particular to a method of sealing a plastics pipe with a plug.

### BACKGROUND

Increasingly, plastics pipes are being used in the utilities industry to carry domestic water supplies and waste. However, before a plastics pipe is commissioned for a potable water supply, it must be disinfected to achieve a required level of sterility.

Traditionally, the plastics pipes are installed in the ground and are then disinfected by chlorination before the potable water supply is introduced. To achieve this, large volumes of chlorine solution need to be supplied to the site, passed through the pipes and then disposed of safely.

The need to disinfect the installed pipes means that the time between installation and commissioning of the pipes may be undesirably long. In addition to increased labour costs, the time delay between installation and commissioning increases the duration of road works and/or disruption to water supplies. It is therefore highly desirable to negate the requirement of onsite sterilisation.

UK patent application GB-A-2431611 (Glynwed Pipe Systems Limited) describes a method of manufacturing pipe coils that are sterilised and sealed prior to installation. In particular, a molten polymer compound is extruded, cooled and cut to form a pipe. The pipe is either sterilised during or after extrusion and the sterilised pipe is sealed at each end using sealing means that either comprises a heat shrinkable sealing cap or a heat shrinkable sleeve and a plug. The sealing means then maintain the sterility of the pipe so that no chlorination, or a reduced chlorination, is required onsite to disinfect the pipe between installing and commissioning. Prior to commissioning, the sealing means are peeled away from the pipe end or cut and removed from the pipe end. Japanese patent application JP7243577 A (Osaka Co Limited) describes a plugging device for a pipe which comprises an expansion mechanism. The plugging device is radially outwardly expanded within a bore of a plastics pipe without the use of an additional expansion tool.

It is an object of the present invention to provide an alternative method of sealing a plastics pipe prior to installation.

### BRIEF SUMMARY OF THE DISCLOSURE

In accordance with the present invention there is provided a method of sealing a plastics pipe with a plug, wherein said plug includes an electrofusion element on an outer surface thereof, said method comprising the steps of:
inserting said plug in a bore of the pipe and energising said electrofusion element whilst said pipe is urged radially inwardly said plug against to form a seal between said plug and said pipe. Preferably, the pipe is a coiled pipe and is preferably sealed at both ends.

The present invention provides a method of sealing a plastics pipe where the seal is preferably formed after the pipe has been sterilised. Therefore, little or no onsite sterilisation will be required allowing a cheaper, quicker and more convenient installation/commissioning process. Since the plug forms a seal inside the bore of the pipe, no sealing components project radially from the pipe making a pipe sealed in accordance with the present invention suitable for any installation operation, including mains insertion replacement techniques.

In one embodiment, not part of the invention, said pipe and said plug are radially urged against one another by radially expanding said plug against an inner surface of said pipe. Preferably, the plug is adapted to receive a plug expansion tool for radially expanding said plug against said inner surface of said pipe. Further preferably, an outer diameter of said plug is expanded by said plug expansion tool at a rate of about 2 mm/min. Said plug and said pipe each have a longitudinal axis and said plug is held relative to said pipe so that the longitudinal axis of said plug is substantially coaxial with the longitudinal axis of said pipe during said energisation of said electrofusion element. Preferably, said plug expansion tool holds said plug relative to said pipe so that the longitudinal axis of said plug is substantially coaxial with the longitudinal axis of said pipe during said energisation of said electrofusion element.

In an alternative preferable embodiment, an inner diameter of said pipe is expanded prior to inserting said plug in said bore, where said plug preferably has an initial outer diameter greater than said inner diameter of said pipe prior to expansion. Preferably, said inner diameter of said pipe is expanded by between about 4% and 6%. Preferably, said inner diameter of said pipe is expanded using a pipe expansion tool. The pipe expansion tool preferably expands an inner diameter of said pipe by applying a radially outward expansion force to said pipe, where the pipe expansion tool is preferably inserted into said bore of said pipe and said expansion force is preferably applied to an inner surface of said pipe. Said pipe expansion tool is preferably removed from said bore prior to insertion of said plug in said bore. The pipe and said plug are preferably radially urged against one another by elastic relaxation of said pipe after removal of said radially outward expansion force.

In a further embodiment, not part of the invention, the pipe and the plug are radially urged against one another by compressing said pipe radially inwardly against said plug. Preferably, the pipe is compressed by applying a substantially uniform radially inward force around an outer surface of the pipe. This will ensure that a uniformly even electrofusion joint is formed. In another embodiment, not part of the invention, the pipe is compressed using a pipe compression band that fits around said outer surface of the pipe.

In all embodiments, said plug preferably comprises a fusible polymeric material and said electrofusion element is embedded therein, where said fusible polymeric material is preferably polyethylene. The plastics pipe is preferably composed of polyethylene. Good and reliable joints are achievable by exploiting a combination of thermal expansion and mechanical expansion or compression during the electrofusion process. The present invention is therefore suitable for sealing pipes whose inner diameter may vary due to a combination of toleranced dimensions.

Preferably, said electrofusion element is connected to a terminal pin at each end thereof, and said terminal pins are adapted to connect said electrofusion element to an electrical power source. The terminal pins allow the electrofusion element to be energised quickly and easy once the plug is positioned in the pipe.

Preferably, said plug and said seal are capable of resisting an internal pipe pressure up to 1.5 times the rated maximum operating pressure of said pipe. In this embodiment, the sealed pipe will withstand standard pressure testing and will maintain sterility throughout pressure testing.

Preferably, the pipe is commissioned by cutting the sealed ends off the pipe and connecting the pipe to a fluid network. Thus, the sterility of the pipe may be maintained throughout installation and commissioning.

Not part of the present invention, a plug is provided for sealing a bore of a plastics pipe, wherein said plug includes an electrofusion element on a fusible outer surface thereof, and said plug comprises a socket that is adapted to receive a plug expansion tool for radially expanding said plug. The electrofusion element is preferably embedded in said fusible outer surface which preferably comprises a fusible polymeric material. Further preferably, the fusible polymeric material is polyethylene.

In an embodiment not part of the invention, the electrofusion element is connected to a terminal pin at each end thereof, and said terminal pins are adapted to connect said electrofusion element to an electrical power source.

Not part of the present invention, an apparatus is provided or sealing a bore of a plastics pipe, comprising:
a plug including an electrofusion element on a fusible outer surface thereof; and
a plug expansion tool for radially expanding said plug;
wherein said plug comprises a socket that is adapted to receive said plug expansion tool.

Not part of the present invention, an apparatus is provided for sealing a bore of a plastics pipe, comprising:
a plug including an electrofusion element on a fusible outer surface thereof; and
a pipe expansion tool for radially expanding an inner diameter of the pipe.

In accordance with a fifth aspect of the present invention, there is provided an apparatus for sealing a bore of a plastics pipe, comprising:
a plug including an electrofusion element on a fusible outer surface thereof; and
a pipe compression tool for radially compressing an inner diameter of the pipe.
Preferably, said pipe compression tool comprises a pipe compression band that fits around an outer surface of the pipe.

Preferably, said electrofusion element is embedded in said fusible outer surface which preferably comprises a fusible polymeric material. Further preferably, said fusible polymeric material is polyethylene. In a particularly preferable embodiment, not part of the invention, said electrofusion element is connected to a terminal pin at each end thereof, and said terminal pins are adapted to connect said electrofusion element to an electrical power source.

### BRIEF DESCRIPTION OF THE DRAWINGS

Embodiments of the invention are further described hereinafter with reference to the accompanying drawings, in which:

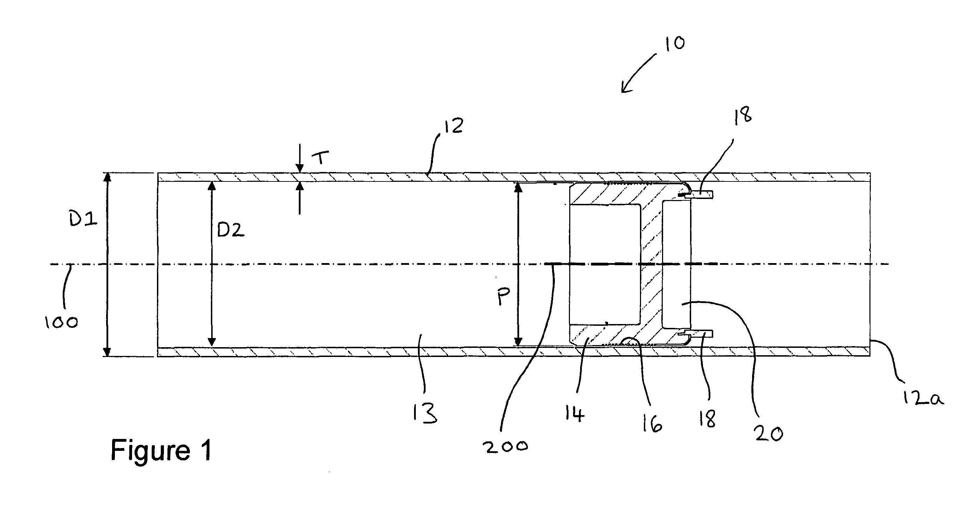

Figure 1 is a cross-sectional view of a pipe and plug according to the present invention.

### DETAILED DESCRIPTION

The present invention seeks to provide a method for sealing a plastics pipe so that, preferably, the pipe may be sterilised in a factory environment prior to sealing and then be delivered to an installation site where it may be installed and commissioned whilst maintaining its sterility. A sealed pipe made in accordance with the present invention will be suitable for carrying potable water supplies or other fluids where cleanliness is of particular importance. Alternatively, sealed pipes made in accordance with the present invention may be made to resist internal pressures of up to 1.5 times the rated maximum operating pressure of the pipe making them particularly suited to withstanding the pressure testing that is necessary before pipes are commissioned to carry pressurised fluids such as domestic gas or water supplies.

Figure 1 shows a sealing system 10 which comprises a plastics pipe 12 and a plug 14. The pipe 12 is substantially tubular and has a bore 13. In the preferable embodiment shown in Figure 1, the pipe 12 is a hollow cylinder centred on a longitudinal axis 100 of the pipe 12. The pipe 12 is defined by a wall of thickness T and has an outer diameter D1 and an inner diameter D2. The pipe 12 is preferably made from at least one polymeric material and is preferably made from polyethylene. The pipe 12 may be formed as a coiled pipe for easy transportation to installation sites.

The plug 14 is shaped to conform to the profile of the pipe bore 13. In the embodiment shown in Figure 1, the plug 14 is cylindrical, having a longitudinal axis 200 and an outer diameter P. The plug 14 has an electrofusion element 16 that is coiled around an outer surface of the plug 14 and is embedded in a fusible polymeric material such as polyethylene. The electrofusion element 16 is an electrically resistive wire that heats up when an electric current is passed therethrough. Each end of the electrofusion element 16 is connected to a terminal pin 18 which is connectable to a power source for electrically energising the electrofusion element 16. In one embodiment, the plug 14 may additionally comprise a socket 20 that is shaped to receive a plug expansion tool that is capable of applying a radially outward expansion force on the plug 14.

As is conventional in the plastics pipe industry, the pipe 12 may be sized according to its nominal outer diameter D1. Often, the outer diameter D1 and the wall thickness T are each made to a tolerance, ΔD1 and ΔT respectively, so that the magnitude of the inner diameter D2 is determined by the actual magnitudes of the outer diameter D1 and wall thickness T.

Traditionally, pipe electrofusion fittings are designed as socket fittings that operate on the outer surface of a pipe. In that case, only one toleranced dimension (the outer diameter, D1) needs to be considered. In contrast, one must consider two toleranced dimensions when forming an electrofusion joint on the inside of a pipe whose inner diameter D2 is determined by the magnitudes of the outer diameter D1 and wall thickness T. Thus, for pipes of this type, the inner diameter D2 potentially varies over a wide range as a result of the compound of the tolerances ΔD1 and ΔT. Therefore, a plug 14 of diameter P may be a close fit in the bore of one pipe (where D2 - P ≈ 0), but a significant gap may exist when the same plug is inserted into the bore of another pipe of the same nominal outer diameter D1 (where D2 - P » 0). Consequently, the potential variation in inner pipe diameters D2 can lead to inconsistent and possibly ineffective electrofusion joints being formed using a given plug 14.

The present invention solves this problem by providing a method of forming consistently successful electrofusion joints inside the bore of plastics pipes by radially urging one of the pipe 12 and plug 14 against the other during electrofusion. Therefore, any gap (D2-P) that may exist between the plug 14 and the pipe 12 as a result of the above-mentioned tolerances is reduced to zero so that effective electrofusion joints can be made.

In an embodiment not part of the invention, the diameter P of the plug 14 is sized to match the smallest inner diameter D2 allowed by the tolerances of the outer diameter D1 and the wall thickness T. Therefore, the plug 14 is either a close fit in the bore 13 of the pipe 12 (D2 ≈ P) or an annular gap (D2-P) exists around the plug 14 if the plug is held coaxially with the pipe 12. To form an electrofusion joint between the plug 14 and the pipe 12, the terminal pins 18 of the plug 14 are connected to a power source and energised for a predetermined time period. As an electric current is passed through the electrofusion element 16, heat is generated due to electrical resistance which causes the fusible polymeric material in which the electrofusion element 16 is embedded to melt forming a melt bubble around the outer surface of the plug 14. Due to the coefficient of thermal expansion of the fusible polymeric material, the outer surface of the plug 14 expands radially outwardly as a result of the heating. The radial expansion of the fusible polymeric material will reduce the size of the gap if D2>P or will bear against the inner surface of the pipe 12 if D2 ≈ P. In addition to being thermally expanded, the plug 14 is mechanically expanded during the electrofusion process. In particular, prior to the electrofusion element taking place, the plug expansion tool (not shown) is received in the socket 20 of the plug 14. During the electrofusion process, the plug expansion tool is operated to mechanically expand the plug 14 radially outwardly. Preferably, holding means hold the plug 14 relative to the pipe 12 so that the longitudinal axis 200 of the plug 14 is coaxial with the longitudinal axis 100 of the pipe 12 during electrofusion and expansion. Further preferably, the plug expansion tool is the holding means.

During the electrofusion process, the plug expansion tool expands the plug at a steady rate, preferably expanding the diameter P of the plug 14 radially outwards at a rate of about 2 mm/min. The combination of thermal expansion and mechanical expansion of the plug 14 causes the fusible polymeric material around the surface of the plug 14 to exude between the hot wires of the electrofusion element 16. This exerts a radially outward force on the inner surface of the pipe and ultimately closes the gap between the plug 14 and the pipe 12. A bond between the plug 14 and the pipe 12 is created when the current flowing through the electrofusion element 16 is switched off and the fusible polymer material around the outside surface of the plug 14 is allowed to cool and harden.

In the embodiment of the invention, the diameter P of the plug 14 is sized to match the largest inner diameter D2 allowed by the tolerances of the outer diameter D1 and the wall thickness T. For pipes 12 whose inner diameter D2 are the largest size allowed by the tolerances ΔD1 and ΔT, the plug 14 will be a close fit in the bore 13 of the pipe 12 and no gap will exist. In most cases however, the pipe 12 will have an inner diameter D2 that is less than the diameter P of the plug 14 and so the plug 14 will not fit into the bore 13 of the pipe 12. In these cases, part of the pipe 12 may be radially expanded by a pipe expansion tool (not shown) to permit insertion of the plug 14 in the bore 13 of the pipe 12. The pipe expansion tool may cause expansion of the pipe 12 by direct mechanical means or by hydraulic or pneumatic means. Preferably, the pipe expansion tool radially expands the inner diameter D2 of the pipe by approximately 4% to 6%. The pipe expansion tool is then removed from the bore 13 of the pipe 12 and the plug 14 is promptly inserted before the pipe 12 elastically relaxes towards its original (unexpanded) dimensions. Elastic relaxation of the pipe 12 begins immediately after the pipe expansion tool is removed (although the rate of relaxation may be quite slow) so the plug 14 must be inserted in the bore 13 of the pipe 12 before the pipe's inner diameter D2 contracts to a size that is less than the diameter P of the plug 14. Once the plug 14 has been inserted into the bore 13 of the pipe 12, the relaxing pipe 12 will contract around the plug 14 exerting a radially inward force on the plug 14. At this point, there will be no annular gap between the plug 14 and the pipe 12 and so the two may be welded together by energising the electrofusion element in the manner described above.

In an embodiment not part of the invention, the diameter P of the plug is sized to the smallest inner diameter D2 allowed by the tolerances of the outer diameter D1 and the wall thickness T as with the first embodiment. Therefore, the plug 14 is either a close fit in the bore 13 of the pipe 12 (D2 ≈ P) or an annular gap (D2-P) exists around the plug 14 if the plug is held coaxially with the pipe 12. The terminal pins 18 of the plug 14 are connected to a power source and energised for a predetermined time period to form an electrofusion joint between the plug 14 and the pipe 12. As an electric current is passed through the electrofusion element 16, heat is generated due to electrical resistance which causes the fusible polymeric material in which the electrofusion element 16 is embedded to melt forming a melt bubble around the outer surface of the plug 14. Due to the coefficient of thermal expansion of the fusible polymeric material, the outer surface of the plug 14 expands radially outwardly as a result of the heating. The radial expansion of the fusible polymeric material will reduce the size of the gap if D2>P or will bear against the inner surface of the pipe 12 if D2 ≈ P. As the outer surface of the plug 14 thermally expands, the pipe 12 is radially inwardly compressed by a pipe compression tool to bear against the plug 14. This requires a uniform application of pressure to the pipe 14 since any imbalance could potentially lead to gaps in the annular electrofusion joint. A suitable pipe compression tool comprises a uniform compression band that fits around the outer surface of the pipe 14 and is tightened to uniformly compress the pipe 14 radially inwardly against the plug 12. The magnitude of compression must be great enough to radially urge against the plug 12, but not so great that cold flow (creep) occurs which may lead to non-uniform electrofusion joint.

Prior to sealing the pipe 12 using any of the methods described above, the pipe 12 may be sterilised by passing a sterilising fluid through its bore 13. Prompt sealing of each end of the pipe 12 following sterilisation allows the sealed and sterilised pipe to be transported and supplied to an installation site where it may be installed with little or no onsite sterilisation treatment. Thus, the time required to install and commission the pipe is significantly reduced thereby reducing labour costs and minimising disruption caused by road works or interrupted utility supplies.

Before a pipeline is commissioned, it is normal and sometimes necessary to perform a pressure test to confirm that the pipe will maintain its integrity for its intended purpose. The above-described methods allow seals to be formed that are capable of withstanding high pressures and will preferably withstand pressures up to 1.5 times the maximum operating pressure of a given pipe. Therefore, the pipe may be pressure tested with the seals in place thus maintaining sterility up until the pipe is ready to be commissioned.

Once the pipe has been installed (and optionally pressure tested), a final connection may be made by cutting the sealed end off the pipe 12 and connecting the pipe 12 to a valve or another pipe already in-situ.

## Claims

1. A method of sealing a plastics pipe (12) with a plug (14), wherein said plug (14) includes an electrofusion element (16) on an outer surface thereof, said method comprising the steps of:
inserting said plug (14) in a bore (13) of the pipe (12) and energising said electrofusion element (16) whilst said pipe (12) is urged radially inwardly against said plug (14) to form a seal between said plug (14) and said pipe (12).

2. A method according to claim 1, wherein an inner diameter (D2) of said pipe (12) is expanded by a pipe expansion tool prior to inserting said plug (14) in said bore (13), and said pipe is urged radially inwardly against said plug by elastic relaxation of said pipe following said expansion, preferably wherein said plug has an initial outer diameter (D1) greater than said inner diameter of said pipe prior to expansion.

3. A method according to claim 2, wherein said pipe expansion tool expands an inner diameter (D2) of said pipe (12) by applying a radially outward expansion force to said pipe.

4. A method according to claim 3, wherein said pipe expansion tool is inserted into the bore (13) of said pipe (12) and said expansion force is applied to an inner surface of said pipe, and preferably wherein said pipe expansion tool is removed from said bore prior to insertion of said plug (14) in said bore, thereby allowing elastic relaxation of said pipe.

5. A method according to any of claims 2 to 4, wherein said inner diameter (D2) of said pipe (12) is expanded by between about 4% and 6%.

6. A method according to claim 1, wherein said pipe (12) is urged radially inwardly against said plug (14) by compressing said pipe radially inwardly against said plug, preferably wherein said pipe is compressed by applying a substantially uniform radially inward force around an outer surface of the pipe, and further preferably wherein said pipe is compressed using a pipe compression band that fits around said outer surface of the pipe (12).

7. A method according to any preceding claim, wherein said plug (14) comprises a fusible polymeric material, preferably polyethylene, and said electrofusion element (16) is embedded therein.

8. A method according to any preceding claim, wherein said plastics pipe (12) is composed of polyethylene; and/or wherein said pipe is sterilised prior to forming a seal between said pipe and said plug (14).

9. A method according to any preceding claim, wherein said plug (14) and said seal formed between said pipe (12) and said plug are capable of resisting an internal pipe pressure up to 1.5 times the rated maximum operating pressure of said pipe.

10. A method according to any preceding claim, wherein said pipe (12) is a coiled pipe.

11. A method according to any preceding claim, wherein said pipe (12) is sealed at both ends and, preferably, wherein said pipe is commissioned by cutting the sealed ends off the pipe and connecting the pipe to a fluid network.

12. A method according to any preceding claim, wherein said electrofusion element (16) is connected to a terminal pin (18) at each end thereof, and said terminal pins are adapted to connect said electrofusion element to an electrical power source.

## Patentansprüche

1. Verfahren zum Abdichten eines Kunststoffrohrs (12) mit einem Stöpsel (14), wobei der Stöpsel (14) ein Elektrofusionselement (16) auf einer äußeren Oberfläche davon umfasst, wobei das Verfahren folgende Schritte umfasst:
Einführen des Stöpsels (14) in eine Bohröffnung (13) des Rohrs (12) und Einschalten des Elektrofusionselements (16), während das Rohr (12) radial nach innen gegen den Stöpsel (14) getrieben wird, um eine Abdichtung zwischen dem Stöpsel (14) und dem Rohr (12) zu bilden.

2. Verfahren nach Anspruch 1, wobei ein Innendurchmesser (D2) des Rohrs (12) durch ein Rohrdehnungswerkzeug vor dem Einführen des Stöpsels (14) in die Bohröffnung (13) gedehnt wird, und das Rohr radial nach innen gegen den Stöpsel durch elastische Lockerung des Rohrs nach der Dehnung getrieben wird, wobei der Stöpsel vorzugsweise einen anfänglichen Außendurchmesser (D1) hat, der größer als der Innendurchmesser des Rohrs vor der Dehnung ist.

3. Verfahren nach Anspruch 2, wobei das Rohrdehnungswerkzeug einen Innendurchmesser (D2) des Rohrs (12) durch Anwendung einer radial nach außen gerichteten Ausdehnungskraft auf das Rohr ausdehnt.

4. Verfahren nach Anspruch 3, wobei das Rohrdehnungswerkzeug in die Bohröffnung (13) des Rohrs (12) eingeführt wird und die Ausdehnungskraft auf eine Innenfläche des Rohrs angewandt wird, und wobei das Rohrdehnungswerkzeug vorzugsweise vor der Einführung des Stöpsels (14) in die Bohröffnung aus der Bohröffnung entfernt wird, wodurch die elastische Lockerung des Rohrs ermöglicht wird.

5. Verfahren nach den Ansprüchen 2 bis 4, wobei der Innendurchmesser (D2) des Rohrs (12) zwischen 4 % und 6 % gedehnt wird.

6. Verfahren nach Anspruch 1, wobei das Rohr (12) radial nach innen gegen den Stöpsel (14) getrieben wird, indem das Rohr radial nach innen gegen den Stöpsel verdichtet wird, wobei das Rohr vorzugsweise durch Aufwendung einer im Wesentlichen gleichmäßigen, nach innen ausgerichteten Radialkraft um eine Außenfläche des Rohrs angewandt wird, und wobei das Rohr ferner unter Verwendung eines Rohrkompressionsbandes verdichtet wird, das um die Außenfläche des Rohrs (12) passt.

7. Verfahren nach einem der vorangehenden Ansprüche, wobei der Stöpsel (14) einen schmelzbaren Polymerwerkstoff, vorzugsweise Polyethylen, umfasst und das Elektrofusionselement (16) darin eingebettet ist.

8. Verfahren nach einem der vorangehenden Ansprüche, wobei das Kunststoffrohr (12) aus Polyethylen zusammengesetzt ist; und/oder wobei das Rohr vor der Bildung einer Abdichtung zwischen dem Rohr und dem Stöpsel (14) sterilisiert wird.

9. Verfahren nach einem der vorangehenden Ansprüche, wobei der Stöpsel (14) und die Abdichtung zwischen dem Rohr (12) und dem Stöpsel einem Innenrohrdruck von bis zu 1,5 Mal den maximalen Betriebsnenndruck des Rohrs standhalten können.

10. Verfahren nach einem der vorangehenden Ansprüche, wobei das Rohr (12) eine Rohrschlange ist.

11. Verfahren nach einem der vorangehenden Ansprüche, wobei das Rohr (12) an beiden Enden abgedichtet ist, und wobei das Rohr durch Abschneiden der abgedichteten Enden des Rohrs und Verbindung des Rohrs mit einem Fluidnetz in Betrieb genommen wird.

12. Verfahren nach einem der vorangehenden Ansprüche, wobei das Elektrofusionselement (16) mit einem Anschlussstift (18) an den jeweiligen Enden verbunden wird und die Anschlussstifte so angepasst werden, um das Elektrofusionselement mit einer elektrischen Leistungsquelle zu verbinden.

## Revendications

1. Une méthode d'obturation d'un tuyau en matière plastique (12) avec un bouchon obturateur (14), ledit bouchon obturateur (14) comprenant un élément d'électro-fusion (16) sur une surface extérieure de celui-ci, ladite méthode comprenant les étapes :
d'insertion dudit bouchon obturateur (14) dans un alésage (13) du tuyau (12), et l'excitation dudit élément d'électro-fusion (16) pendant la sollicitation radiale vers l'intérieur dudit tuyau contre ledit bouchon obturateur (14) en formant un joint entre ledit bouchon obturateur (14) et ledit tuyau (12).

2. Une méthode selon la revendication 1, dans laquelle on procède à l'expansion d'un diamètre intérieur (D2) dudit tuyau (12) à l'aide d'un outil d'expansion de tuyau préalablement à l'insertion dudit bouchon obturateur (14) dans ledit alésage (13), et ledit tuyau étant sollicité radialement vers l'intérieur contre ledit bouchon obturateur par relaxation élastique dudit tuyau, à la suite de ladite expansion, de préférence dans lequel ledit tuyau possède un diamètre extérieur initial (D1) supérieur audit diamètre intérieur dudit tuyau préalablement à l'expansion.

3. Une méthode selon la revendication 2, dans laquelle ledit outil d'expansion de tuyau assure l'expansion d'un diamètre intérieur (D2) dudit tuyau (12) par l'application d'une force d'expansion radiale vers l'extérieur sur ledit tuyau.

4. Une méthode selon la revendication 3, dans laquelle on introduit ledit outil d'expansion de tuyau dans l'alésage (13) dudit tuyau (12), et on applique ladite force d'expansion sur une surface d'expansion dudit tuyau, et de préférence dans laquelle on enlève ledit outil d'expansion dudit alésage avant d'introduire ledit bouchon obturateur (14) dans ledit alésage, en permettant ainsi la relaxation élastique dudit tuyau.

5. Une méthode selon une quelconque des revendications 2 à 4, dans laquelle on procède à une expansion comprise entre environ 4% et 6% dudit diamètre intérieur (D2) dudit tuyau (12).

6. Une méthode selon la revendication 1, dans laquelle ledit tuyau (12) est sollicité radialement vers l'intérieur contre ledit bouchon obturateur (14) par la compression radiale vers l'intérieur dudit tuyau contre ledit bouchon obturateur, ledit tuyau étant de préférence comprimé par l'application d'une force radiale vers l'intérieur substantiellement uniforme autour d'une surface extérieure dudit tuyau, et de préférence dans laquelle on comprime ledit tuyau à l'aide d'une bande de compression placée autour de ladite surface extérieure du tuyau (12).

7. Une méthode selon une quelconque des revendications précédentes, dans laquelle ledit bouchon obturateur (14) comprend une matière polymérique fusible, de préférence du polyéthylène, et ledit élément d'électro-fusion (16) est incorporé dans celle-ci.

8. Une méthode selon une quelconque des revendications précédentes, dans laquelle ledit tuyau en matière plastique (12) est composé de polyéthylène ; et/ou dans laquelle ledit tuyau est stérilisé préalablement à la formation d'un joint entre le tuyau et ledit bouchon obturateur (14).

9. Une méthode selon une quelconque des revendications précédentes, dans laquelle ledit bouchon obturateur (14) et ledit joint formé entre ledit tuyau (12) et ledit bouchon obturateur sont en mesure de résister à une pression intérieure du tuyau pouvant atteindre jusqu'à 1,5 fois la pression de service nominale maximum dudit tuyau.

10. Une méthode selon une quelconque des revendications précédentes, dans laquelle ledit tuyau (12) est un tuyau spiralé.

11. Une méthode selon une quelconque des revendications précédentes, dans laquelle ledit tuyau (12) est fermé aux deux bouts, et, de préférence, dans laquelle on met ledit tuyau en service en coupant les bouts fermés du tuyau, et en raccordant le tuyau à un réseau de fluide.

12. Une méthode selon une quelconque des revendications précédentes, dans laquelle ledit élément d'électro-fusion (16) est raccordé à une broche (18) à chaque bout de celui-ci, et lesdites broches sont adaptées pour raccorder chaque élément d'électro-fusion à une source d'alimentation électrique.
